# EUROPEAN PATENT APPLICATION

(11) **EP 2 565 164 A1**
(43) Date of publication of application: **06.03.2013**
(21) Application number: 11774656.0
(22) Date of filing: 20.01.2011
(51) Int. Cl.: C02F 1/62, B01J 38/48, B01J 38/60, B01J 38/64, C01G 49/00

(54) **WASTEWATER TREATMENT METHOD**

(30) Priority: 28.04.2010 JP 2010103001
(71) Applicant: Mitsubishi Heavy Industries, Ltd., Tokyo 108-8215 (JP)
(72) Inventor: OBAYASHI Yoshiaki, Tokyo 108-8215 (JP)
(74) Representative: Intès, Didier Gérard André
(86) International application number: PCT/JP2011/050915
(87) International publication number: WO 2011/135871

(57) **Abstract**

Disclosed is a wastewater treatment method such that, after iron tetrachloride is added to wastewater containing arsenic and vanadium so as to make the molar ratio of the iron to arsenic in this wastewater 20 and iron tetrachloride is added to this wastewater so as to make the molar ratio of iron to vanadium 10-80, the pH is adjusted to 5.8-8.6, and solid-liquid separation is carried out.

## Description

### Technical Field

The present invention relates to a method for treating wastewater containing arsenic and vanadium.

### Background Art

To remove nitrogen oxides in exhaust gas, a NOx removal catalyst is provided to an exhaust gas line in a boiler (coal-fired boiler) for generating steam by combustion of coal or the like. After being used for a predetermined period of time, the NOx removal catalyst is taken out from the exhaust gas line, subjected to a washing treatment, and then reused.

Waste washing water used for a washing treatment of such a used NOx removal catalyst contains an arsenic (As) component which has been contained in exhaust gas and attached to the NOx removal catalyst. Hence, the concentration of the arsenic is reduced to a predetermined value (0.1 mg/liter) or below, for example, by adding a metal salt of calcium (Ca), magnesium (Mg), iron (Fe), aluminum (Al), zinc (Zn), or the like to form a water-insoluble salt of the arsenic with the metal salt, and then performing solid-liquid separation (coprecipitation method), as described in Non Patent Document 1 and the like, before the waste washing water is discharged.

### Citation List

### Patent Literature

Patent Literature 1 : Japanese Patent Application Publication No. 2000-296400

### Non Patent Literature

Non Patent Literature 1: "YONTEI KOGAI BOUSHI NO GIJYUTSU TO HOUKI [SUISHITSU HEN] (Fourth revised technologies and regulations for pollution prevention [water quality ])", fifth edition (enlarged), edited by Editorial Board of KOGAI BOUSHI NO GIJYUTSU TO HOUKI, the Japan Environmental Management Association for Industry, June 30, 1994, p. 256 to 237

### Summary of Invention

### Technical Problem

Here, when a used NOx removal catalyst as described above is subjected to a washing treatment with washing water, the waste washing water is colored in deep yellow. Investigation into the causes of the color reveals that this color is due to contamination of the wastewater with a vanadium (V) component from the NOx removal catalyst. Although no discharge standard value is set for the vanadium component, the vanadium component present in the wastewater leads to bad impression of the appearance of the wastewater.

Against such a background, an object of the present invention is to provide a method for treating wastewater, which is capable of removing the color due to vanadium, while reducing an arsenic concentration to a predetermined value or below, even when the wastewater contains arsenic and vanadium.

### Solution to Problem

A method for treating wastewater according to a first invention for solving the above problem is characterized in that the method comprises:
performing a reaction by adding an iron salt to wastewater containing arsenic and vanadium at a molar ratio of iron to arsenic in the wastewater of 20, and further adding the iron salt to the wastewater at a molar ratio of iron to the vanadium of 10 to 80; then
adjusting the pH of the wastewater to 5.8 to 8.6; and
performing solid-liquid separation.

A method for treating wastewater according to a second invention is characterized in that the iron salt in the first invention of the present invention comprises iron (III).

### Advantageous Effects of Invention

The method for treating wastewater according to the present invention makes it possible to remove the color due to vanadium, while an arsenic concentration is reduced to a predetermined value or below.

### Description of Embodiments

An embodiment of a method for treating wastewater according to the present invention is described below. However, the present invention is not limited to the following embodiment.

The method for treating wastewater according to this embodiment comprises:
performing a reaction by adding an iron salt to wastewater containing arsenic (As) and vanadium (V) at a molar ratio of iron (Fe) to arsenic (As) in the wastewater of 20 and further adding the iron salt to the wastewater at a molar ratio of iron (Fe) to vanadium (V) of 10 to 80; then adjusting the pH of the wastewater to 5.8 to 8.6; and performing solid-liquid separation.

Examples of the wastewater containing arsenic (As) and vanadium (V) include washing liquids used for a washing treatment of a NOx removal catalyst provided to an exhaust gas line in a coal-fired boiler, and the like. Examples of the washing liquids used for a washing treatment of a NOx removal catalyst include water used to roughly wash the NOx removal catalyst, an aqueous alkali solution (for example, a 1 N aqueous sodium hydroxide solution or the like) used to wash, with an alkali, the roughly washed NOx removal catalyst, an aqueous acid solution (for example, a 1 N aqueous sulfuric acid solution or the like) used to wash, with an acid, the NOx removal catalyst washed with the alkali, and the like. Each of these waste washing liquids contains arsenic and vanadium. Hence, it is preferable to treat a mixture of these waste washing liquids in one batch, because the treatment can be conducted efficiently.

The arsenic (As) is present in the wastewater, for example, because arsenic (As) in combustion exhaust gas of coal is attached to the NOx removal catalyst, and then enters the wastewater during the washing treatment. For the wastewater containing arsenic (As) to be dischargeable to the outside, the concentration of the arsenic (As) needs to be a predetermined value (0.1 mg/liter) or below.

The vanadium (V) is, for example, a component constituting the NOx removal catalyst, and is present in the wastewater, because the vanadium (V) enters the wastewater during the washing treatment of the NOx removal catalyst. No predetermined value of the concentration of vanadium (V) is set for discharge of wastewater containing vanadium (V) as described above to the outside. However, the vanadium (V) component results in the color (yellow) as described earlier, and hence leads to a bad impression of the appearance of the wastewater during discharge.

To wastewater containing arsenic (As) and vanadium (V), for example, an aqueous iron trichloride (FeCl₃) solution (for example, iron (Fe) is 1 mmol/milliliter) is added at a molar ratio of iron (Fe) to arsenic (As) in the wastewater of 20, and further, for example, an aqueous iron trichloride (FeCl₃) solution (for example, iron (Fe) is 1 mmol/milliliter) is added at a molar ratio of iron (Fe) to vanadium (V) of 10 to 80. After a reaction is performed, the pH of the wastewater is adjusted to 5.8 to 8.6 by adding an aqueous alkali solution (for example, calcium hydroxide (Ca(OH)₂) slurry). As a result, a reaction represented by the following formula (1) occurs, so that the arsenic (As) component and the vanadium (V) component in the wastewater are adsorbed on the following precipitates.

2FeCl₃ + 3Ca(OH)₂ → Fe₂O₃●3H₂O↓ + 3CaCl₂ (1)

A liquid phase obtained by solid-liquid separation of the thus formed precipitates by filtration or the like not only has an arsenic (As) concentration which is at or below a predetermined value (0.1 mg/liter), but also becomes colorless (light transmittance at a wavelength of 400 nm: 90% or more).

Here, the present inventors have conducted intensive study, and, as a result, have found the following fact. Specifically, no correlation exists between the above-described effect and the amount of the iron salt added determined from the molar ratio of iron (Fe) to the total amount of arsenic (As) and vanadium (V) in the wastewater. In other words, in some cases, the above-effect can be obtained, even when the molar ratio of iron (Fe) to the total amount of arsenic (As) and vanadium (V) is small. On the other hand, in other cases, the above-described effects cannot be obtained, even when the molar ratio of iron (Fe) to the total amount of arsenic (As) and vanadium (V) is large.

The reason for this is not clarified, but is presumably as follows. Specifically the precipitates can adsorb not only the arsenic (As) component from the wastewater, but also the vanadium (V) component from the wastewater. In this respect, there may be a great difference in the ease of the adsorption between the vanadium (V) component and the arsenic (As) component.

Accordingly, the method for treating wastewater according to this embodiment makes it possible to remove the color (yellow) due to the vanadium (V) (light transmittance at a wavelength of 400 nm: 90% or more), while the arsenic (As) concentration is reduced to a predetermined value (0.1 mg/liter) or below, even when the wastewater contains arsenic (As) and vanadium (V). Hence, the wastewater can be discharged without causing any trouble.

Note that examples of the iron (Fe) salt include various salts ranging from iron chlorides to iron sulfates, iron nitrates, and the like. Preferably, the iron (Fe) salt comprises iron (III), because the arsenic (As) component can be effectively removed.

In addition, the amount of the iron salt added to the wastewater equals to the total amount of the amount with which the molar ratio of iron (Fe) to arsenic (As) in the wastewater can be 20 and an amount with which the molar ratio of iron (Fe) to vanadium (V) in the wastewater can be 10 to 80 (preferably 10 to 30) for the following reasons. Specifically, if the amount of the iron salt equals to the total amount of an amount with which the molar ratio of iron (Fe) to arsenic (As) is less than 20 and an amount with which the molar ratio of iron (Fe) to vanadium (V) is less than 10, not only the arsenic (As) concentration in the wastewater cannot be reduced to a predetermined value (0.1 mg/liter) or less, but also the color (yellow) due to vanadium (V) cannot be removed (light transmittance at a wavelength of 400 nm: 90% or more). On the other hand, if the amount of the iron salt equals to the total amount of an amount with which the molar ratio of iron (Fe) to arsenic (As) exceeds 20 and an amount with which the molar ratio of iron (Fe) to vanadium (V) exceeds 80, the iron salt is wasted.

### Examples

Checking experiments conducted to check the effect of the method for treating wastewater according to the present invention are described below. However, the present invention is not limited to the checking tests described below.

### [Washing treatment of NOx removal catalysts]

Honeycomb-shaped NOx removal catalysts A to C used in a coal-fired boiler and shown in the following Table 1 were each subjected to a washing treatment as follows. Specifically, each NOx removal catalyst was roughly washed by being immersed in a predetermined amount (three times the volume of the catalyst) of water (at normal temperature for 3 hours), washed with an alkali by being immersed in a predetermined amount (three times the volume of the catalyst) of a 1 N aqueous sodium hydroxide (NaOH) solution (at normal temperature for 2 hours), and then washed with an acid by being immersed in a predetermined amount (three times the volume of the catalyst) of a 1 N aqueous sulfuric acid (H₂SO₄) solution (at normal temperature for 1 hour). Thus, waste washing liquids were obtained.

**[Table 1]**

| NOx removal catalyst | TiO₂ (%) | WO₃ (%) | V₂O₅ (%) | Others (%) | NOx removal performance reduction percentage from the initial |
|---|---|---|---|---|---|
| A | 80.0 | 11.0 | 0.5 | 8.5 | 0.61 |
| B | 82.5 | 8.5 | 1.6 | 7.4 | 0.72 |
| C | 80.0 | 10.0 | 0.25 | 9.75 | 0.5 |

### [Composition analysis of wastewater]

Equal amounts of the waste washing liquids used for washing the NOx removal catalysts A to C in the rough washing, the alkali washing, and the acid washing were mixed with each other for each of the NOx removal catalysts A to C. Thus, test samples A to C were obtained. Then, the concentrations of arsenic (As) and vanadium (V) of these test samples A to C and the light transmittances thereof (wavelength: 400 nm) were determined, and the color states thereof were visually observed. Table 2 below shows the results.

**[Table 2]**

| Test sample | As (mg/l) | V (mg/l) | Transmittance (%) | Visual observation |
|---|---|---|---|---|
| A | 386 | 74.3 | 0.5 | Deep yellow |
| B | 6.3 | 189 | 12.4 | Deep yellow |
| C | 1101 | 90.3 | 1.3 | Deep yellow |

### [Experiment 1]

A predetermined amount of each of the test samples A to C was taken out, an aqueous iron trichloride (FeCl₃) solution (iron (Fe) concentration: 1 mmol/milliliter) was added thereto in an amount shown in Table 3 below, and then a calcium hydroxide (Ca(OH)₂) slurry was added thereto with string. When the pH reached 7.1 to 7.4, solid-liquid separation was performed by filtration, Then, the concentrations of arsenic (As) and vanadium (V) and the light transmittances (wavelength: 400 nm) of the obtained filtrates were determined, and the color states thereof were visually observed. Table 3 below shows the results.

**[Table 3]**

| Test example | Test sample | Fe ratio (Molar ratio) | | | As (mg/l) | V (mg/l) | Transmittance (%) | Visual observation |
|---|---|---|---|---|---|---|---|---|
| | | α | β | γ | | | | |
| 1 | A | 20 | 0 | 15.6 | 3.28 | 5.1 | 76.5 | Light yellow |
| 2 | | 20 | 53.1 | 27.3 | 0.01 | <0.1 | 99.8 | colorless |
| 3 | B | 20 | 0.1 | 0.6 | 0.01 | 19.8 | 68.8 | Yellow |
| 4 | | 20 | 5 | 5.3 | <0.01 | 1.9 | 89.7 | Slight yellow |
| 5 | | 20 | 10 | 10.2 | <0.01 | 0.3 | 97.8 | colorless |
| 6 | | 20 | 20 | 20 | <0.01 | <0.1 | 100 | colorless |
| 7 | C | 20 | 41.5 | 22.3 | <0.01 | <0.1 | 99.9 | colorless |

| | | | | | | | | |
|---|---|---|---|---|---|---|---|---|
| * α: the ratio of the molar amount (Fe_{αmol}) of Fe added for the molar amount (Asₘₒₗ) of As β: the ratio of the molar amount (Fe_{βmol}) added for the molar amount (Vₘₒₗ) of V γ: the ratio of the total molar amount (Fe_{αmol} + Fe_{βmol}) of Fe added to the total amount (Asₘₒₗ + Vₘₒₗ) of the molar amount (Asₘₒₗ) of As and the molar amount (Vₘₒₗ) of V | | | | | | | | |

As can be seen from Table 3, a colorless filtrate was obtained in Test Example 5 (γ=10.2) , but the filtrate remained light yellow in Test Example 1 (γ=15.6). This shows that no correlation exists between the color removal and the amount of the iron salt added determined from the molar ratio of iron (Fe) to the total amount of arsenic (As) and vanadium (V).

Moreover, it was shown that colorless filtrates were not obtained in Test Examples 1, 3, and 4 (α=20, β<10) , but colorless filtrates were obtained in Test Examples 2, and 5 to 7 (α=₂₀, (β≥10). Accordingly, it can be said that, when the iron salt is added in an amount which equals to the total of the amount with which the molar ratio of iron (Fe) to arsenic (As) can be 20, and an amount with which the molar ratio of iron (Fe) to vanadium (V) can be 10 or more, it is of course possible to reduce the arsenic (As) concentration to the predetermined value (0.1 mg/liter) or less, and also it is possible to remove the color (yellow) due to vanadium (V) (light transmittance at a wavelength of 400 nm: 90% or more).

### [Experiment 2]

Next, how the effect was changed by the pH was examined. Specifically, predetermined amounts of the test samples B were taken out, then an aqueous iron trichloride (FeCl₃) solution (iron (Fe) concentration: 1 mmol/milliliter) was added thereto in the same amount as in Test Example 5, and then a calcium hydroxide (Ca (OH)₂) slurry was added thereto with string. When the pH reached the values shown in Table 4, solid-liquid separation was performed by filtration. Then, the light transmittances (wavelength: 400 nm) and the color states were visually observed. Table 4 below shows the results.

**[Table 4]**

| Test example | pH | Transmittance (%) | Visual observation |
|---|---|---|---|
| 8 | 5.8 | 95.7 | Colorless |
| 9 | 6.6 | 97.1 | Colorless |
| 10 | 8.6 | 98.0 | Colorless |

As can be seen from Table 4, it has been shown that the effect of the present invention can be achieved over the pH range of from 5.8 to 8.6, i.e., within the range dischargeable to the outside.

### Industrial Applicability

The method for treating wastewater according to the present invention enables even a wastewater containing arsenic and vanadium to be discharged without any problem. Hence, the method is extremely industrially applicable.

## Claims

1. A method for treating wastewater, **characterized in that** the method comprises:
performing a reaction by adding an iron salt to wastewater containing arsenic and vanadium at a molar ratio of iron to arsenic in the wastewater of 20, and further adding the iron salt to the wastewater at a molar ratio of iron to the vanadium of 10 to 80; then
adjusting the pH of the wastewater to 5.8 to 8.6; and
performing solid-liquid separation.

2. The method for treating wastewater according to claim 1, **characterized in that** the iron salt comprises iron (III).
